# EUROPEAN PATENT APPLICATION

(11) **EP 1 091 085 A1**
(43) Date of publication of application: **11.04.2001**
(21) Application number: 99120214.4
(22) Date of filing: 09.10.1999
(51) Int. Cl.: E21B 37/06, C10G 75/04, C10G 9/16, C10L 10/00, C10L 1/14

(54) **Asphaltene inhibitors**

(71) Applicant: Cognis Deutschland GmbH, Dep. Intellectual Properties, 40551 Düsseldorf (DE)
(72) Inventor: Lesimple, Alain, 04180 Peyruis (FR); Herold, Claus-Peter, Dr., 40822 Mettmann (DE); Groffe, Didier, 04100 Manosque (FR); Breuer, Wolfgang, Dr., 41352 Korschenbroich (DE)

(57) **Abstract**

Described are compositions for preventing the precipitation of asphaltenes in crude oils or for removing solid asphaltene residues from the surface of production plants or the petroleum-containing formation surrounding the well in the production and refining of petroleum, where the compositions comprise:
a) alkylarylsulphonic acids and
b) condensation products of fatty acids having from 12 to 24 carbon atoms and polyamines of the general formula (I)

   H₂N-[(CH₂)ₙ-NH]ₘ-R¹ (I)

   in which R¹ is hydrogen, a methyl, ethyl, hydroxyethyl or a -(CH₂)ₙ-NH-R² group, R² is hydrogen, a methyl, ethyl or hydroxyethyl group, and n is a number between 1 and 4, and m stands for numbers from 1 to 6, and
c) emulsifiers chosen from the groups
   i) alkoxylated fatty alcohols having from 8 to 22 carbon atoms and from 10 to 60 mol of alkoxides per mole of fatty alcohol and/or
   ii) ethoxylated alkylamines having alkyl radicals of from 12 to 22 carbon atoms and from 10 to 30 mol of ethylene oxide per mole of alkylamine.

## Description

The present invention relates to compositions for preventing the precipitation of asphaltene from crude oil and for removing solid asphaltene residues from the surface of production and refining plants or the petroleum-containing formation surrounding the well to a process for preventing the precipitation of asphaltene from crude oil, and to the use of certain surfactants for preventing the precipitation of asphaltene from crude oil.

Crude oil is a complex mixture of different paraffinic and aromatic hydrocarbons, the individual constituents having very different chemical and physical properties. The distillation of crude oil thus gives very readily volatile, low-viscosity constituents and also wax-like, high-viscosity fractions. The last group includes petroleum resins and, for the most part, asphaltenes which are in colloid-disperse form in the oil phase.

In view of the complex composition of asphaltenes, containing polymolecular and heterocyclic ring systems as well as complexed metal ions, they are generally characterized by means of their solubility. The petroleum fraction which is insoluble in normal alkenes but soluble in toluene is by definition an asphaltene. The "dissolution" of the asphaltenes being a complex process, for which there is still no complete theoretical description (cf. E.Y. Sheu, O.C. Mullins, *Asphaltenes - Fundamentals and Applications,* Plenum Press, New York, 1995, Chapter I and Chapter III).

Asphaltenes are present in the oil phase of the crude oil as micellar colloids, the individual micelles in each case consisting of two or more different molecules. The micelles have varying sizes depending on pressure, temperature and composition of the oil phase. Thus, it is known, for example, that lighter aromatic hydrocarbons in the crude oil stabilize the asphaltene micelles. Under the conditions of petroleum production or recovery, however, the asphaltenes frequently precipitate out, which leads to the formation of high-viscosity, wax-like to solid residues on the surface of the production equipment and of the petroleum-containing formation surrounding the well. The asphaltene residues block the pores of the formation, which leads to a drastic reduction in the rates of recovery and in the worst case can make recovery completely impossible. Asphaltene residues on the surfaces of the production equipment, for example the production tubing or the walls of pipelines or separators can also considerably hinder recovery.

Various methods are therefore known to remove asphaltene residues which occur in the production of petroleum. For example, the residues can be removed mechanically or attempts can be made to remove them using aromatic solvents, in particular toluene, xylene or higher aromatic solvents. However, since some of these compounds have insufficient dissolution properties, alternatives have been pursued. The dissolution properties of the above aromatics can be improved, for example according to the teaching of US 5,504,063 by addition of up to 50% by volume of certain N-substituted imidazolines or condensation products of polyamines with fatty acids. In addition, it is known from FR 2679151 A1 that a combination of alkylbenzenesul-phonic acids and cationic imidazolines is suitable for preventing the precipitation of asphaltene in crude oils. The surfactants are preferably dissolved in oil or other hydrocarbons and can then be added directly to the crude oil. Although this combination of anionic and cationic surfactants generally leads to adequate inhibition of asphaltene, problems arise again and again during practical use if such asphaltene inhibitors are to be dispersed or emulsified in water. It is frequently the case that the active ingredients are insufficiently dissolved or distributed within the aqueous medium. However, it is precisely the formulation as an aqueous emulsion which is preferable for use in the field since it is then possible to inject this emulsion to the bottom of the hole, thus using water as carrier fluid for several chemicals including the oil soluble asphaltene inhibitors.

The object of the present invention was therefore to provide asphaltene inhibitors which can be emulsified in water and can be applied in this form to a subterranean production equipment. In this connection, the particular physical conditions in such geological formations, in particular high pressures and temperatures must be taken into account.

It has been found that a combination of anionic, cationic and selected nonionic surfactants achieves the above object.

A first embodiment claims compositions for preventing the precipitation of asphaltene in crude oil which comprise a) alkylarylsulphonic acids and b) condensation products of fatty acids having from 12 to 24 carbon atoms and polyamines of the general formula (I)

H₂N- [(CH₂)ₙ-NH]ₘ-R¹ (I)

in which R¹ is hydrogen, a methyl, ethyl, hydroxyethyl or a -(CH₂)ₙ-NH-R² group, R² is hydrogen, a methyl, ethyl or hydroxyethyl group, and n is a number between 1 and 4 and m stands for numbers from 1 to 6, and also c) emulsifiers chosen from the groups i) alkoxylated fatty alcohols having from 8 to 22 carbon atoms and from 5 to 60 mol of alkylene oxides, like ethylene oxide and/or propylene oxide, per mole of fatty alcohol and/or ii) ethoxylated alkylamines having alkyl radicals of from 12 to 22 carbon atoms and from 10 to 30 mol of ethylene oxide per mole of alkylamine.

Alkylarylsulphonic acids a) are known compounds. They preferably conform to the general formula (II)

R³-Ar-SO₃X (II)

where Ar is a disubstituted aryl radical, X is hydrogen or an anion, and R³ is a linear or branched, saturated or unsaturated alkyl radical having from 12 to 32 carbon atoms. The sulphonic acids are prepared by processes known to the person skilled in the art, for example by sulphonation of the corresponding alkyl aromatics. Particular preference is given to those alkylaryl-sulphonates in which R³ is a linear or branched, saturated or unsaturated alkyl radical having preferably from 12 to 32 and in particular from 12 to 24 and particularly preferably from 12 to 22 carbon atoms. Examples of such alkyl aromatics are dodecylbenzene-, tetradecylbenzene-, hexadecylbenzene-, eicosylbenzene-, tetracosylbenzene-, dotriacosylbenzene- or didodecyl-benzenesulphonic acid. Suitable as aromatic, divalent radicals Ar are, in addition to benzene ( -C₆H₄-) the naphthalene radical (-C₁₀H₆-). Particular preference is, however, given to compounds a) based on benzene. The alkylaromatics a) are usually present in the compositions according to the invention as acids or salts.

The compounds b) are also substances known to the person skilled in the art. The products are obtained from amines of the general formula (I)

H₂N-[(CH₂)ₙ-NH]ₘ-R¹ (I)

in which R¹ is hydrogen, a methyl, ethyl, hydroxyethyl or a -(CH₂)ₙ-NH-R² group, R² is hydrogen, a methyl, ethyl or hydroxyethyl group, and n is a number between 1 and 6, and m stands for numbers from 1 to 6, by reaction with C₁₂-C₂₄-fatty acids. The fatty acids can be saturated or unsaturated, linear or branched. Particular preference is given to linear, unsaturated fatty acids of the given carbon number. Examples are oleic, linoleic, linolenic, erucic, arachidic and behenic acid and mixtures of these acids. Preference is given to using mixtures of C₁₆ to C₁₈ fatty acids, such as those obtained from tallow. However, fatty acids from rapeseed or soya oil, sun flower or tall oil are also preferred starting materials for the preparation of component b).

Typical examples for polyamines according to formula I are Ethylenediamine, Diethylenediamine, and Diethylenetriamine. Also suitable are N,N-dimethyl-1,3-diaminopropane and aminoethylethanolamine.

In view of the application properties of their resulting condensation products, it has proven optimal to use polyfunctional amines of the formula (I) in which R¹ is a hydroxyethyl or (CH₂)₂NH₂ group, R² is hydrogen, n is 2, and m is 1 or 2. Ethoxylated derivatives are also suitable.

In the preparation of the condensation products, the fatty acids and the polyamines can, for example, be used in a molar ratio of from 0.5:2.0 to 2.0:1, preferably from 0.7:1 to 1.5:1. The components are heated over a period of from 0.5 to 5 hours, preferably from 1 to 2 hours at a temperature of from 80 to 180°C, preferably from 100 to 150°C until the fatty acid esters have been partially or completely converted. The mixtures should still comprise from 0.3 to 2.0%, preferably from 0.6 to 1.5%, of basic nitrogen. As the person skilled in the art is aware, a mixture of cyclic products of the imidazoline type and linear products is formed in the condensation.

As well as surfactant components a) and b), the compositions according to the invention also comprise selected emulsifiers c). Suitable for this purpose are, firstly, alkoxylated fatty alcohols having from 8 to 22 carbon atoms and from 10 to 60 mol of alkoxides per mole of fatty alcohol. In particular ethylene and propoylene oxides are the most suitable alkoxides. Secondly ethoxylated alkylamines having alkyl radicals of from 12 to 22 carbon atoms and from 10 to 30 mol of ethylene oxide per mole of alkylamine.

Particular preference is, however, given to the use of ethoxylated fatty alcohols which can be obtained by reaction of C₈-C₂₂-fatty alcohols with ethylene oxide under pressure and in the presence of acidic or basic catalysts. In this connection, preference is given to products which comprise, per mole of fatty alcohol, from 10 to 60 mol of ethylene oxide, but particular preference is given to those alkoxylates which have from 12 to 22 carbon atoms, and from 20 to 50 mol and preferably from 20 to 30 mol of ethylene oxide per mole of fatty alcohol. Suitable fatty alcohols are linear primary, branched or unbranched, saturated or unsaturated compounds. Suitable saturated fatty alcohols are caprylic, pelargonic, capric, lauryl, myristyl, palmityl, stearyl, arachidyl and behenyl alcohol. Suitable unsaturated fatty alcohols are, for example, oleyl alcohol, elaidyl alcohol, ricinoleic alcohol or linoleyl alcohol. Mixtures of the above compounds are also suitable, as are produced during industrial synthesis. Typical mixtures are based on alcohols of native origin having from 12 to 18 carbon atoms, e.g. from coconut fatty alcohol, palm fatty alcohol, tallow fatty alcohol or oleyl alcohol. Besides the ethoxylated derivatives described above it is also possible to use propoxylated fatty alcohols and, more preferably ethoxylated and propoxylated derivatives (random or block polymers). If such mixed alkoxylates are used, it is preferred to choose such compounds containing from 1 to 10 mole propylene oxide and from 10 to 40 moles of ethylene oxide.

Also suitable are amine components chosen from the group of ethoxylated N-alkyl-1,3-diaminopropanes having from 5 to 25, preferably from 5 to 20, mol of ethylene oxide per mole of N-alkyl-1,3-diaminopropane.

The latter emulsifiers are commercially available and are known to the person skilled in the art, for example under the trade name Ethoduomeen from Akzo.

As well as components a) to c), the compositions according to the invention can also comprise further constituents. Preference is given to jointly using carboxylic acids d) having from 1 to 6 carbon atoms, i.e., for example, formic, acetic, propionic, butyric , glutaric-, oxalic-, pentanoic or hexanoic acid. Particular preference is given to the use of acetic acid.

It is further preferred that an organic, oxygen-containing solvent e) is present in the compositions. This is preferably chosen from the group of primary alcohols having from 1 to 6 carbon atoms and/or their derivatives and/or glycols and/or their oligomers and their derivatives. Methanol, ethanol, propanol, butanol, pentanol, hexanol, glycol, ethylene glycol, propylene glycol, butyl glycol, 1,2-propanediol, 2-propoxyethanol, diethylene glycol and/or diethylene glycol butyl ether are particularly suitable. It is also possible to use any desired mixtures of the above solvents. In addition, it is possible for small amounts of water, i.e. from 1 to 20% by weight, preferably from 2 to 18% by weight and in particular from 5 to 15% by weight, based on the composition to also be present in the compositions according to the invention.

The compositions are preferably prepared by dissolving the emulsifiers in the solvent, components a) and b) then being added to this mixture with heating to 30 to 60°C. Finally, the emulsifiers c) and optionally compounds d) and/or e) are added.

The compositions according to the invention comprise component a) preferably in amounts of from 10 to 25% by weight, preferably from 10 to 20% by weight. Component b) is preferably present in amounts of from 1 to 25% by weight, preferably from 2 to 15% by weight and in particular from 2 to 10% by weight, based on the composition. In this connection, it has proven advantageous to use component a) and component b) in a quantitative ratio of from 4:1 to 1:4 and preferably from 4:1 to 1:1 in the compositions. The emulsifiers c) are preferably present in amounts of from 1 to 20% by weight, preferably from 5 to 15% by weight, based on the composition. For the compound d), an amount of from 1 to 10% by weight, preferably an amount of 2 to 6% by weight, has proven advantageous. The solvent e) can be present in amounts of 10 to 80% by weight.

In addition, the compositions can comprise further additives from the groups of corrosion inhibitors, scale inhibitors, wax inhibitors, biocides, demulsifiers, filtration auxiliaries and/or flocculation auxiliaries. A further subject-matter of the present invention thus relates to a process for removing solid asphaltene residues from the surface of production equipment or the petroleum-containing formation surrounding the well by bringing the asphaltene residues into contact with an aqueous emulsion according to the above description until the residues have at least partially dissolved. In the recovery of petroleum, this is evident, for example, from the fact that the recovery rate increases again. The amount of asphaltene deposits and the temperature used determine the time required for the deposit to be removed. For example, the asphaltene deposits dissolve under the conditions which prevail on the surface of the petroleum-containing formation, namely high pressure and high temperatures (60 to 250°C) more quickly than, for example, deposits which occur in the recovery pipe since the temperatures which prevail here are lower (< 100°C). As already explained above, dissolution of the residue is taken to mean a complex process in which the asphaltenes dissolve colloidally in the form of micelles.

The compositions according to the invention can, however, also be used to prevent the precipitation of solid asphaltenes in crude oils. The present invention thus provides, in other embodiments, a process for preventing the precipitation of solid asphaltenes from crude oil, in which an aqueous emulsion of a composition according to the above description is added to the crude oil. In this case, the composition is metered in at a rate such that it reaches a concentration of, preferably, from 30 to 2000 ppm, preferably from 50 to 1500 ppm and in particular from 100 to 600 ppm in the crude oil. In the case of this use too, the composition can be pumped as an aqueous emulsion into the production equipment. It is, however, also possible to add the composition to the crude oil directly in order in this way to prevent the precipitation of asphaltene. The invention further relates to the use of compositions according to the above description for removing solid asphaltene residues from the surface of production equipment or the petroleum-containing formation surrounding the well by using emulsions according to the present invention it is possible to inject different water soluble chemicals together with oil soluble additives through common production equipment at the same time. Thus it is possible to have a single injection line for several treatment chemicals, including oil soluble asphaltene dispersants.

### Examples

### 1. Laboratry tests:

To investigate the emulsifying properties of the compositions according to the invention, 250 ml of tap water were mixed in each case with 1500 ppm of the compositions defined in more detail in Table 1, and then the emulsion was measured optically and using a turbidimeter. In all cases the quality of the emulsions obtained was measured after 24 h at a storage temperature of 50 °C. No emulsions according to the invention showed stability problems.

**Table 1**

| | | | | | | | |
|---|---|---|---|---|---|---|---|
| (all figures are given in wt%) | | | | | | | |

| Composition | A | B | C | D | E | F | G |
|---|---|---|---|---|---|---|---|
| | | | | | | | |
| Fatty acid amide | 9 | 9 | 9 | 9 | 9 | 9 | 9 |
| Alkylarylsulphonic acid | 9 | 9 | 9 | 9 | 9 | 9 | 9 |
| C16/18 fatty alcohol + 30 EO | 9.5 | | | | | | |
| C16/18 fatty alcohol + 20 EO | | 9.5 | | | | | |
| N-tallow alkyl-1,3-diaminopropane + 15 EO | | | 12 | | 12 | | 9 |
| N-tallow alkyl-1,3-diaminopropane + 10 EO | | | | 12 | | 12 | |
| Acetic acid | 3 | 2 | | | 4 | 4 | |
| Water | 10 | 10 | 10 | 10 | 10 | 10 | 10 |
| Butyl glycol | | 60.5 | 60 | 60 | 56 | 56 | 63 |
| Diethylene glycol monobutyl ether | 59.5 | | | | | | |

### 2. Field tests

On a pilot well in North Africa in order to determine the threshold limit of the asphaltene inhibitor according to the invention, a composition as given in table 1 was injected into the well. It was found that using a level of between 70 to 100 ppm of said compositions the asphaltene deposits in the well could be removed within a few days, without well shut down.

## Claims

1. Compositions for preventing the precipitation of asphaltene in crude oil, comprising
a) alkylarylsulphonic acids and
b) condensation products of fatty acids having from 12 to 24 carbon atoms and polyamines of the general formula (I)
H₂N-[(CH₂)ₙ-NH]ₘ-R¹ (I)
in which R¹ is hydrogen, a methyl, ethyl, hydroxyethyl or a -(CH₂)ₙ-NH-R² group, R² is hydrogen, a methyl, ethyl or hydroxyethyl group, and n is a number between 1 and 4, and m stands for numbers from 1 to 6, and
c) emulsifiers chosen from the groups
i) alkoxylated fatty alcohols having from 8 to 22 carbon atoms and from 10 to 60 mol of alkoxide per mole of fatty alcohol and/or
ii) ethoxylated alkylamines having alkyl radicals of from 12 to 22 carbon atoms and from 10 to 30 mol of ethylene oxide per mole of alkylamine.

2. Compositions according to Claim 1, characterized in that the alkylarylsulphonic acids a) are chosen from compounds of the formula (II),
R³-Ar-SO₃X (II)
where Ar is a substituted aryl radical, X is hydrogen or an anion, and R³ is a linear or branched, saturated or unsaturated alkyl radical having from 12 to 32 carbon atoms.

3. Compositions according to Claim 2, characterized in that, in the formula (II), R³ is an alkyl radical having from 12 to 24 carbon atoms.

4. Compositions according to Claims 1 to 3, characterized in that emulsifiers chosen from the group of ethoxylated fatty alcohols having from 12 to 22 carbon atoms and from 10 to 60 mol of ethylene oxide per mole of fatty alcohol, are present.

5. Compositions according to Claims 1 to 4, characterized in that emulsifiers chosen from the group of ethoxylated fatty alcohols having from 12 to 22 carbon atoms and from 20 to 50 mol of ethylene oxide, preferably from 20 to 30 mol of ethylene oxide per mole of fatty alcohol, are present.

6. Compositions according to Claims 1 to 5, characterized in that emulsifiers chosen from the group of ethoxylated N-alkyl-1,3-diaminopropanes having from 5 to 25 mol, preferably from 5 to 20 mol, of ethylene oxide per mole of N-alkyl-1,3-diaminopropane, are present.

7. Compositions according to Claims 1 to 6, characterized in that the compositions additionally comprise, as component d), carboxylic acids having from 1 to 6 carbon atoms.

8. Compositions according to Claims 1 to 7, characterized in that acetic acid is present as component d).

9. Compositions according to Claims 1 to 8, characterized in that the compositions additionally comprise, as component e), solvents to 6 carbon atoms and/or their derivatives and/or glycols and/or their oligomers and their derivatives.

10. Compositions according to Claims 1 to 9, characterized in that the compositions comprise water in amounts of from 1 to 20% by weight, preferably from 2 to 18% by weight and in particular from 5 to 15% by weight, based on the composition.

11. Compositions according to Claims 1 to 10, characterized in that methanol, ethanol, propanol, butanol, pentanol, hexanol, glycol, ethylene glycol, propylene glycol, butyl glycol, 1,2-propanediol, 2-propoxyethanol, diethylene glycol and/or diethylene glycol butyl ether are present as component e).

12. Compositions according to Claims 1 to 11, characterized in that the components a) and b) are present in the weight ratio of from 4:1 to 1:4 and, preferably, from 4:1 to 1:1.

13. Compositions according to Claims 1 to 12, characterized in that component a) is present in amounts of from 10 to 25% by weight, preferably from 10 to 20% by weight, based on the composition.

14. Compositions according to Claims 1 to 13, characterized in that component b) is present in amounts of from 1 to 25% by weight, preferably from 2 to 15% by weight and in particular from 2 to 10% by weight, based on the composition.

15. Compositions according to Claims 1 to 14, characterized in that the emulsifiers c) are present in amounts of from 1 to 20% by weight, preferably from 5 to 15 by weight, based on the composition.

16. Compositions according to Claims 1 to 15, characterized in that the component d) are present in amounts of from 1 to 10% by weight, preferably in amounts of from 2 to 6% by weight, based on the composition.

17. Compositions according to Claims 1 to 16, characterized in that further additives from the groups corrosion inhibitors, scale inhibitors, wax inhibitors, biocides, demulsifiers, filtration auxiliaries and/or flocculation auxiliaries are additionally present.

18. Process for preventing the precipitation of solid asphaltenes from crude oil, characterized in that an aqueous emulsion of a composition according to Claim 1 is added to the crude oil.

19. Process according to Claim 18, characterized in that the composition according to Claim 1 in the crude oil reaches a concentration of from 100 to 2000 ppm, preferably from 200 to 1500 ppm and in particular from 200 to 600 ppm.

20. Process for preventing the precipitation of solid asphaltenes from crude oil, characterized in that a composition according to Claim 1 is added directly to the crude oil.

21. Use of a composition according to Claim 1 for removing solid asphaltene residues from the surface of production plants or the petroleum-containing formation surrounding the well in the production and refining of petroleum.

22. Use of a composition according to Claim 1 for preventing the precipitation of asphaltene in crude oils.
